(19) Europäisches Patentamt
European Patent Office
Office européen des brevets

(11) **EP 2 525 619 A1**

(12) **EUROPEAN PATENT APPLICATION**
published in accordance with Art. 153(4) EPC

(43) Date of publication:
**21.11.2012 Bulletin 2012/47**

(51) Int Cl.:
**H04W 74/08** (2009.01)   **G08G 1/09** (2006.01)
**H04W 72/04** (2009.01)   **H04W 84/18** (2009.01)

(21) Application number: **11732949.0**

(22) Date of filing: **14.01.2011**

(86) International application number:
**PCT/JP2011/050523**

(87) International publication number:
**WO 2011/087079 (21.07.2011 Gazette 2011/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2010  JP 2010006321**

(71) Applicants:
• **Aisin Seiki Kabushiki Kaisha**
  **Aichi 448-8650 (JP)**
• **Keio University**
  **Tokyo 108-8345 (JP)**
• **Feac International Corp.**
  **Tokyo 108-0073 (JP)**

(72) Inventors:
• **KONISHI Yoshichika**
  **Kariya-shi**
  **Aichi 448-8650 (JP)**
• **ISHIDA Takaaki**
  **Fujisawa-shi**
  **Kanagawa 252-8520 (JP)**
• **UEHARA Keisuke**
  **Fujisawa-shi**
  **Kanagawa 252-8520 (JP)**
• **IMAIKE Masayoshi**
  **Tokyo 108-0073 (JP)**

(74) Representative: **Vollnhals, Aurel**
**TBK**
**Bavariaring 4-6**
**DE-80336 München (DE)**

(54) **NODE, COMMUNICATIONS SYSTEM, PROGRAM, AND COMMUNICATIONS METHOD**

(57) Transmission of transmission packets from communication terminals (20) is executed with a probability based on the total number of communication terminals (20) present within a communication area (NA). It is thus possible to determine when to transmit with simple computation, and promptly transmit information. Since when to transmit can be determined with simple computation, when to transmit can promptly be determined according to continuously changing traffic conditions and the throughput of the communication system can be maintained at a high level when the communication terminals (20) are mounted on vehicles.

FIG.2

**Description**

Technical Field

The present invention relates to a node, communication system, program, and communication method, and more specifically to a node constituting a network, a communication system including the node, a program used in the node, and a communication method for information communication.

Background Art

In recent years, information exchange and information sharing service between an information terminal (node) having a communication device and an unspecified number of nodes, such as information exchange between cell-phones or portable game machines and sensor data acquisition on a sensor network, has drawn attention. Also in the road traffic information service field, considerable research and development efforts have been made on communication systems using vehicle-to-vehicle communication. In such communication systems, information collected by a traveling vehicle is transmitted to other vehicles via vehicle-to-vehicle communication to share the information.

However, the time for which nodes are communicable is limited and the communication device conducting the communication imposes a given limit on the information transmission rate. Therefore, in order to transmit/receive accumulated information in a limited time, each node should make the best possible use of a given limited transmission rate to transmit information and receive information from other nodes. To do so, first, it is essential to improve the effective throughput. Thus, various techniques for improving the effective throughput have been proposed (for example, see

Patent Literature 1: Japanese Patent No. 4004517.

Disclosure of Invention

Problems to be Solved by the Invention

In the system described in the Patent Literature 1, a communication device constituting the system measures the number of communication devices in its vicinity based on communication timing signals transmitted from other communication devices, and then transmits information containing the measurement result. A communication device having received the information determines a slot for transmitting information from the communication device itself based on the received information.

However, in the above system, if multiple communication devices transmit information regarding the number of communication devices in their vicinity, a communication device should take into account all pieces of transmitted information to determine the number of communication devices in its vicinity. Therefore, the process for a communication device to specify the number of communication devices in its vicinity is complicated. Consequently, it takes a long time before information transmission starts, resulting in lowering the communication throughput.

Furthermore, the above system requires extra communication for a communication device to determine the number of communication devices in its vicinity. Thus, there is concern about communication bands being unnecessarily occupied.

The present invention is invented in view of the above circumstances and an exemplary object of the present invention is to prevent collision of information in communication between multiple nodes and improve the communication throughput.

Means for Solving the Problems

In order to achieve the above object, the node according to a first exemplary aspect of the present invention is a node constituting a network, comprising:

an estimate means estimating the total number of nodes constituting the network;
a slot setting means setting a slot for outputting one or multiple pieces of information independently from the other nodes;
a probability calculation means calculating the probability of outputting information based on the total number of nodes; and
an output means outputting information in the slot with the probability.

The communication system according to a second exemplary aspect of the present invention comprises multiple nodes of the present invention.

The program according to a third exemplary aspect of the present invention allows a control device of a node constituting a network to execute following procedures:

estimating the total number of nodes constituting the network;
setting a slot for outputting one or multiple pieces of information independently from the other nodes;
calculating the probability of transmitting information based on the total number of nodes; and
outputting information in the slot with the probability.

The communication method according to a fourth exemplary aspect of the present invention is a communication method for conducting communication within a network, including following steps:

estimating the total number of nodes constituting the network;
setting a slot for outputting one or multiple pieces of information independently from the other nodes; calculating the probability of transmitting information based on the total number of nodes; and outputting information in the slot with the probability.

Efficacy of the Invention

The present invention determines whether to output information in a slot according to the probability calculated based on the total number of nodes. In this way, the present invention can reduce collision of information upon information output and improve the communication throughput.

Brief Description of Drawings

FIG. 1 is a block diagram of the communication system of an embodiment;
FIG. 2 is a block diagram of a communication terminal;
FIG. 3 is a block diagram of the total node number estimate unit;
FIG. 4 is a chart schematically showing slots and packets output from communication terminals;
FIG. 5 is a block diagram of the communication terminal according to Embodiment 2;
FIG. 6 is a flowchart (No. 1) for explaining the operation of a communication terminal;
FIG. 7 is a block diagram of the information reception unit according to Embodiment 3;
FIG. 8 is a chart (No. 1) schematically showing packets transmitted from communication terminals;
FIG. 9 is a chart (No. 2) schematically showing packets transmitted from communication terminals;
FIG. 10 is a block diagram of the information reception unit according to Embodiment 5;
FIG. 11 is a flowchart (No. 2) for explaining the operation of a communication terminal;
FIG. 12 is a block diagram of the information transmission unit according to Embodiment 6;
FIG. 13 is a flowchart (No. 3) for explaining the operation of a communication terminal;
FIG. 14 is a flowchart (No. 4) for explaining the operation of a communication terminal; and
FIG. 15 is a graphical representation showing the relationship between the total number of communication terminals and the successful reception rate and throughput.

Mode for Carrying Out the Invention

<Embodiment 1>

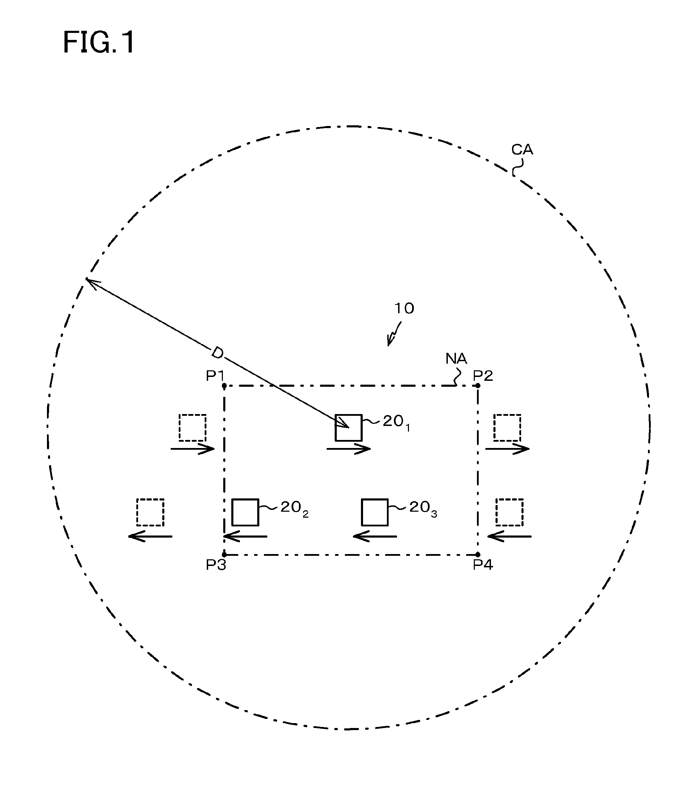

Embodiment 1 of the present invention will be described hereafter with reference to the drawings. FIG. 1 is an illustration schematically showing a communication system 10 according to this embodiment. As seen from FIG. 1, the communication system 10 consists of communication terminals 20 within a communication area NA.

The communication area NA is an area so defined as to include roads on which vehicles run. The communication area NA is a rectangular area defined by four points P1, P2, P3, and P4 specified, for example, by latitudes and longitudes.

The communication terminals 20 are mounted, for example, on vehicles. As the car navigation system mounted on a vehicle reports that the vehicle has entered the communication area NA, the communication terminal 20 functions as a communication terminal constituting the communication system 10. On the other hand, as the car navigation system reports that the vehicle has left the communication area, the communication terminal 20 stops functioning as the communication system 10. As communication terminals 20 enter/leave the communication area NA, the communication terminals 20 constituting the communication system 10 change with time; the configuration of the communication system 10 continuously changes.

A communication terminal 20 can communicate with communication terminals 20 within a communicable area CA defined by the circumference at a distance D from the communication terminal 20. The distance D is substantially larger than the long side of the communication area NA. Therefore, a communication terminal 20 within the communication area NA can communicate with the other communication terminals 20 within the communication area NA.

Furthermore, in this embodiment, each communication terminal 20 conducts single hop communication based on the standard of the mounted communication medium. Then, when a communication terminal 20 enters the communication area NA, the communication terminal 20 transmits traffic information collected by an information device equipped on the vehicle on which the communication terminal 20 is mounted to the other communication terminals 20 in multiple divided packets. The traffic information is information including, for example, the average vehicle speed in a given area and so on. In the following explanation, it is assumed that the communication medium of the communication terminals 20 is of an IEEE 802.11b standardized wireless LAN, the transmission rate is 1 Mbps, and the divided packet size is 1500 bytes.

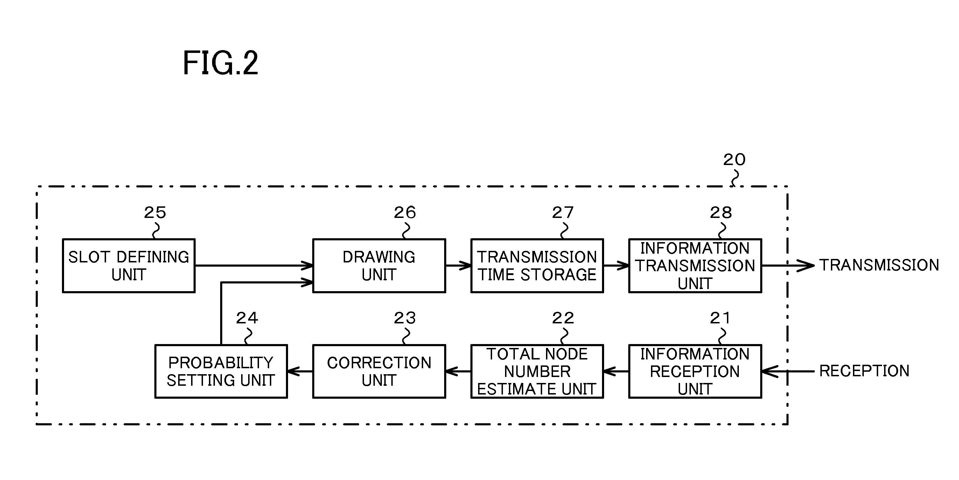

FIG. 2 is a block diagram of a communication terminal 20. As shown in FIG. 2, a communication terminal 20 has an information reception unit 21, a total node number estimate unit 22, a correction unit 23, a probability setting unit 24, a slot defining unit 25, a drawing unit 26, a transmission time storage 27, and an information transmission unit 28.

The information transmission unit 28 transmits a packet associated with transmission time information regarding the time to start transmission (transmission time) in a procedure described later. In the following explanation, a packet the information transmission unit 28 is to send is referred to as a transmission packet.

The information reception unit 21 receives a packet transmitted from another communication terminal 20 and, then, outputs the received packet to the total node number estimate unit 22. In the following explanation, such a packet is referred to as a received packet.

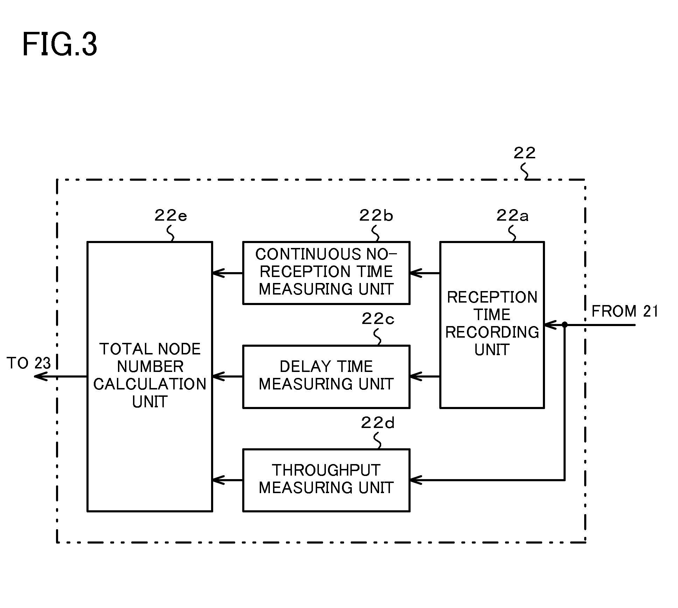

The total node number estimate unit 22 estimates the total number of communication terminals 20 presumably within the communication area NA. FIG. 3 is a block diagram of the total node number estimate unit 22. As shown in FIG. 3, the total node number estimate unit 22 has a reception time recording unit 22a, a continuous no-reception time measuring unit 22b, a delay time measuring time 22c, a throughput measuring unit 22d, and a total node number calculation unit 22e.

When a received packet is output from the information reception unit 21, the reception time recording unit 22a associates information regarding the reception time at which the received packet is received with the received packet. Then, the received packet with which information regarding the reception time is associated is output to the continuous no-reception time measuring unit 22b and delay time measuring time 22c.

The continuous no-reception time measuring unit 22b identifies the time at which the received packet is received from the information associated with the received packet. Then, the continuous no-reception time measuring unit 22b outputs information regarding the time difference from the reception time of the most recently received packet to the total node number calculation unit 22e as continuous no-reception time information.

The delay time measuring time 22c outputs the time difference between the transmission time and reception time from the information associated with the reception packet to the total node number calculation unit 22e as delay time information.

The throughput measuring unit 22d counts the packets received in a unit time T1 in sequence. Then, the throughput measuring unit 22d outputs the count result to the total node number calculation unit 22e as throughput. Here, the unit time T1 is a value predetermined by the system or a value indicated by another communication terminal or system via some communication means.

The total node number calculation unit 22e calculates the latest total number $M_N$ based on an initial value $M_0$ of the total number of communication terminals 20 present within the communication area NA or the total number M calculated based on the initial value $M_0$.

Receiving the continuous no-reception time information, the total node number calculation unit 22e determines whether the continuous no-reception time exceeds a threshold. If the continuous no-reception time exceeds a threshold, the total node number calculation unit 22e doubles the most recently estimated total number M to obtain the latest total number $M_N$ (= 2M).

In the communication of this embodiment, the threshold is considered to be around 400 msec.

On the other hand, if the continuous no-reception time is equal to or shorter than a threshold, the latest total number $M_N$ is calculated based on the delay time. For example, receiving the delay time information, the total node number calculation unit 22e determines whether the delay time exceeds a threshold. If the delay time exceeds a threshold, the total node number calculation unit 22e doubles the most recently estimated total number M to obtain the latest total number $M_N$ (= 2M). In this embodiment, the time necessary for transmitting a packet of information is approximately 13 msec. and the threshold is considered to be twice the value, 26 msec.

If the continuous no-reception time is equal to or shorter than a threshold and the delay time is equal to or shorter than a threshold, the latest total number $M_N$ is calculated based on the throughput. For example, the total node number calculation unit 22e calculates the latest total number $M_N$ based on the formula (1) below if the throughput is below a threshold, and employs the newly calculated total number $M_N$ as the total number of communication terminals 20.

$$M_N = M \left( \beta / (\alpha \times \gamma) \right) \ldots (1)$$

The above $\alpha$ is an ideal number of packets to be received in a unit time T1 when the total number $M_N$ is equal to the actual total number of nodes. The value of $\alpha$ is determined by design. The above $\beta$ is the number of packets the communication terminal of interest has actually received in a unit time T1. The above $\gamma$ is an adjustment factor for adjusting the value of $\alpha$ according to the situation. The value of $\gamma$ is 1 where no particular adjustment is necessary. Here, $\alpha$ is an integer greater than 0. Furthermore, if $\beta$ is 0, $\beta$ is set to 1.

The aforementioned threshold can be, for example, 60 % of the theoretical transmission rate of the communication medium. Then, if the theoretical number of received packets calculated from the transmission rate is 30, the threshold is 18. In such a case, when the number of packets received in a unit time T1 is lower than 18, a new total number $M_N$ is calculated based on the formula (1).

After calculating the latest total number of communication terminals present within the communication area NA, $M_N$, in the above-described process, the total node number calculation unit 22e outputs information regarding the calculated total number $M_N$ to the correction unit 23 as total number information. On the other hand, if the throughput is equal to or above a threshold, the total node number calculation unit 22e outputs the existing total number M to the correction unit 23.

Returning to FIG. 2, receiving the total number information output from the total node number calculation unit 22e, the correction unit 23 determines whether the total number M falls within a given range. The correction unit 23 can set a range of possible total numbers M of which the upper limit is given by a maximum number $M_{MAX}$ and the lower limit is given by a minimum number $M_{MIN}$. If the total number $M_N$ estimated by the total node number estimate unit 22 exceeds the maximum value $M_{MAX}$, the correction unit 23 corrects the value of the estimated total number $M_N$ to the maximum value $M_{MAX}$, and outputs it to the probability setting unit 24. On the other hand, if the total number $M_N$ estimated by the total node number estimate unit 22 is lower than the minimum value $M_{MIN}$, the correction unit 23 corrects the value of the estimated total number $M_N$ to the minimum value $M_{MIN}$, and outputs it to the probability setting unit 24.

On the other hand, if the total number $M_N$ estimated by the total node number estimate unit 22 is equal to or greater than the minimum value $M_{MIN}$ and equal to or lower than the maximum value $M_{MAx}$, the correction unit 23 outputs the total number information output from the total node number estimate unit 22 to the probability setting unit 24 without executing any correction procedure.

The probability setting unit 24 calculates the probability P of its own node transmitting information (= a packet) in a slot defined by the slot defining unit 25. The probability P is calculated using the formula (2) below in which n is the number of nodes expected to transmit packets in a slot defined by the slot defining unit 25. The value of n is a value predetermined by the system, or a value indicated by another node or system via some communication means, and shared by all communication terminals 20.

$$P = \min (n, M) / M \ldots (2)$$

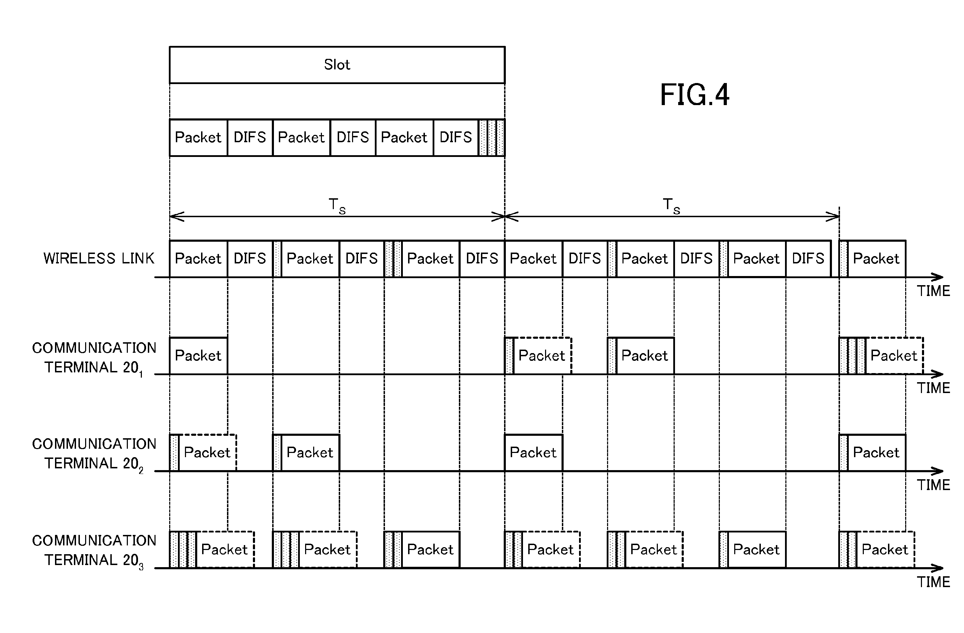

FIG. 4 is a chart schematically showing slots and packets (information) output from the communication terminals $20_1$ to $20_3$ in FIG. 1 when the communication media of the communication terminals 20 according to this embodiment comply with the standard IEEE 802. 11. For example, when estimated three communication terminals $20_1$ to $20_3$ are present within the communication area NA as shown in FIG. 1 and a slot contains three packets, the probability setting unit 24 calculates a probability of 3/3 (= 1) based on the above formula (2). On the other hand, for example, when estimated five communication terminals $20_1$ to $20_5$ are present within the communication area NA and, again, a slot contains three packets, the probability setting unit 24 calculates a probability of 3/5 based on the above formula (2). Then, the probability setting unit 24 outputs information regarding the calculated probability P to the drawing unit 26.

The slot defining unit 25 defines a slot for outputting information in sequence independently from the communication terminals 20 present within the communication area NA. Then, the slot defining unit 25 outputs information regarding the defined slot to the drawing unit 26. The slot length Ts of a slot shown in FIG. 4 is equal to the packet length multiplied by n plus n distributed access inter-frame spaces DIFS and contention window transmission wait time. Here, n is 3 and the number of contention windows is 3.

The drawing unit 26 determines whether to transmit a packet in the created slot based on the probability P. For example, when the probability is 3/3, the drawing unit 26 always determines to transmit information in the defined slot. On the other hand, when the probability is 3/5, the drawing unit 26 determines to transmit information in the defined slot with a probability of 60 %. The drawing method consists of, for example, randomly outputting a number among the numbers from 1 to 100 and, if the number is between 1 and 60, determining to transmit information in the defined slot.

If it is determined by drawing to transmit information in the defined slot, the drawing unit 26 outputs a packet to the transmission time storage 27.

Receiving the packet, the transmission time storage 27 associates the current time with the transmission packet as transmission time information. Then, the transmission time storage 27 outputs the transmission packet associated with the transmission time information to the information transmission unit 28.

The information transmission unit 28 first determines whether there is any other communication terminal 20 transmitting information. If there is no other communication terminal 20 transmitting information, the information transmission unit 28 starts to transmit the transmission packet.

On the other hand, if there is any other communication terminal 20 transmitting information, the information transmission unit 28 first waits for the transmission of information being completed. Then, after a time equivalent to a distributed access inter-frame space DIFS elapses, the information transmission unit 28 determines whether there is any other communication terminal 20 transmitting information during the assigned contention window wait time. If there is no other communication terminal 20 transmitting information, the information transmission unit 28 starts to transmit the transmission packet. If there is any other communication terminal 20 transmitting information during the contention window wait time, the information transmission unit 28 retains the remaining time calculated by subtracting the elapsed time up to then from the initial wait time as the next contention window wait time.

In the communication system 10 consisting of three communication terminals $20_1$ to $20_3$ having the above configuration as shown in FIG. 1, the communication terminals $20_1$ to $20_3$ each transmit a transmission packet once in each slot if the number of communication terminals 20 present within the communication area NA is precisely estimated.

As described above, in this embodiment, the communication terminals 20 transmit transmission packets with a probability based on the total number of communication terminals 20 present within the communication area NA. Therefore, when to transmit is determined by simple calculation and information can promptly be transmitted.

Furthermore, in this embodiment, when to transmit can be determined by simple calculation. Therefore, for example, when the communication terminals 20 are mounted on vehicles, when to transmit can promptly be determined according to continuously changing traffic conditions, whereby the throughput of the communication system 10 can be maintained at a high level.

The communication terminals 20 in this embodiment each can comprise a synchronization means for time-synchronizing with each other among the communication terminals constituting the communication system 10.

In this embodiment, the most recently estimated total number M is doubled in estimating the latest total number $M_N$ based on the continuous no-reception time and delay time. This is not restrictive. The most recently estimated total number M can be multiplied by k (k is a number greater than 1). The bottom line is, a proper total number of communication terminals 20 should be estimated according to the size of the communication area NA, the numbers of communication terminals 20 entering and leaving the communication area NA in a unit time, and so on.

In this embodiment, the probability P for determining whether to transmit a packet in the defined slot is determined based on the total node number. This is not restrictive. The probability P can be adjusted according to the type and/or priority of information to transmit.

For example, when there are four kinds of information to transmit: accident information indicating occurrence of an accident, abrupt deceleration information indicating abrupt deceleration of a vehicle due to sudden braking, backup information indicating the presence/absence of backup, and fuel consumption information regarding fuel consumption, the information is prioritized according to its urgency. Then, the probability for determining whether to transmit the information is weighted according to the priority. For example, the probability P calculated by the probability setting unit 24 can be multiplied by 4 to yield the probability 4P for determining whether to transmit accident information, by 2 to yield the probability 2P for determining whether to transmit abrupt deceleration information, by 0.5 to yield the probability 0.5P for determining whether to transmit backup information, and by 0.25 to yield the probability 0.25P for determining whether to transmit fuel consumption information.

In this way, urgent information has priority in output from the communication terminals 20 and the entire communication system 10 is improved in convenience and usefulness.

<Embodiment 2>

Embodiment 2 of the present invention will be described hereafter with reference to the drawings. Here, the same or equivalent components as or to those in the above embodiment are referred to by the same reference numbers and their explanation will be omitted or simplified.

The communication terminals 20 according to this embodiment are different from the communication terminals 20 in Embodiment 1 in that they are realized with the same configuration as devices such as conventional computers and microcomputers.

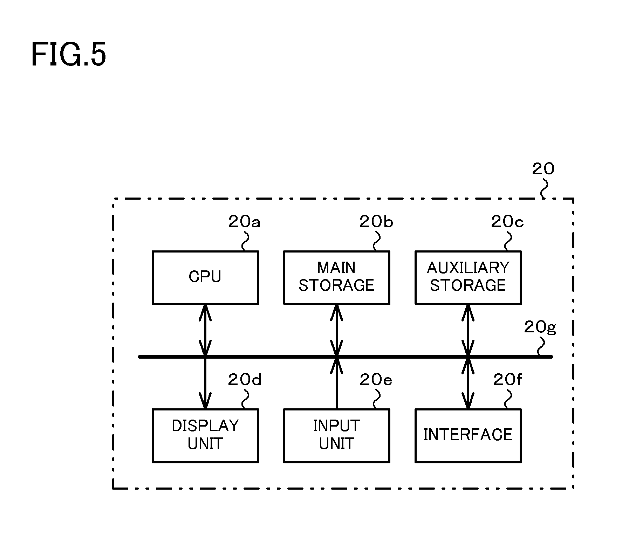

FIG. 5 is a block diagram showing the physical configuration of a communication terminal 20. As shown in FIG. 5, a communication terminal 20 is so composed as to include a CPU (central processing unit) 20a, a main storage 20b, an auxiliary storage 20c, a display unit 20d, an input unit 20e, an interface 20f, and a system bus 20g connecting these units to each other.

The CPU 20a transmits and receives traffic information according to programs stored in the auxiliary storage 20c.

The main storage 20b is so composed as to include a RAM (random access memory) and used as the work area of the CPU 20a.

The auxiliary storage 20c is so composed as to include a nonvolatile memory such as a ROM (read only memory), magnetic disc, and semiconductor memory. The auxiliary storage 20c stores programs executed by the CPU 20a and various parameters. Furthermore, the auxiliary storage 20c successively stores information received via the interface 20f.

The display unit 20d is so composed as to include a LCD (liquid crystal display) and displays processing results of the CPU 20a and so on.

The input unit 20e is composed of a touch panel, a joystick, input keys, and so on. The operator instruction is input via the input unit 20e and notified to the CPU 20a via the system bus 20g.

The interface 20f is a wireless LAN (local area network) interface conducting single hop communication in compliance with the standard IEEE 802.11.

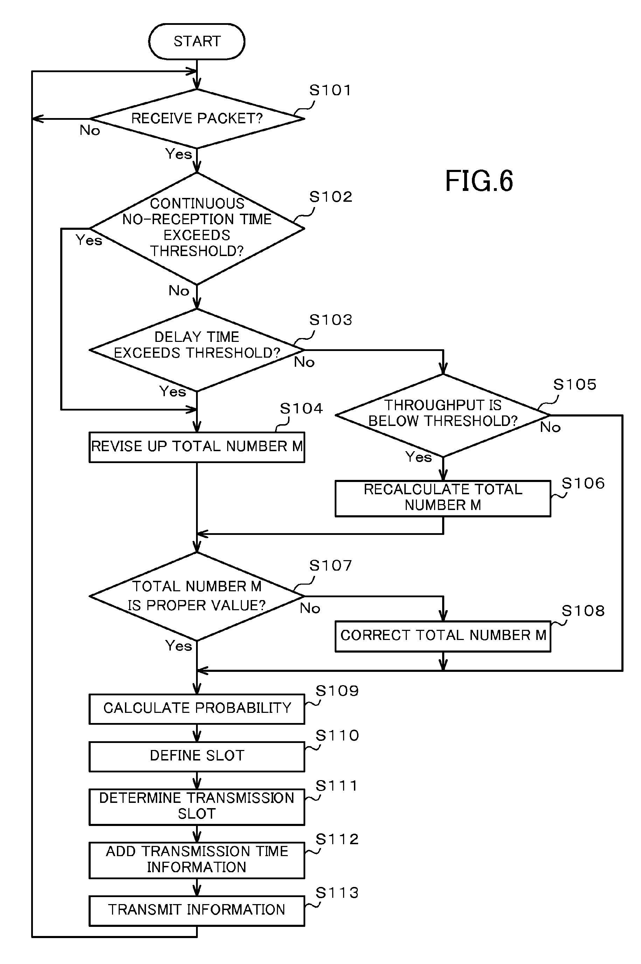

The flowchart of FIG. 6 corresponds to a series of processing algorithm of a program executed by the CPU 20a. Operation of a communication terminal 20 will be described hereafter with reference to FIG. 6. This procedure starts when the car navigation system of a vehicle on which the communication terminal 20 is mounted has notified the CPU 20a that the vehicle has entered the communication area NA. Then, the procedure discontinues when the car navigation system of the vehicle on which the communication terminal 20 is mounted has notified the CPU 20a that the vehicle has left the communication area NA. Here, it is assumed that the total number of communication terminals within the communication area NA is set to an initial value N0.

In the first Step S101, the CPU 20a is on standby until another communication terminal 20 outputs a packet. Then, receiving the packet (Step S101; Yes), CPU 20a proceeds to the next Step S102.

In the Step S 102, the CPU 20a identifies the time at which the packet was received from information associated with the received packet. Then, the CPU 20a calculates the time difference between the reception time of the packet received most recently and the current time as continuous no-reception time. Then, the CPU 20a determines whether the continuous no-reception time exceeds a threshold.

If the continuous no-reception time exceeds a threshold (Step S102; Yes), the CPU 20a proceeds to Step S104. On the other hand, if the continuous no-reception time does not exceed a threshold (Step S102; No), the CPU 20a proceeds to Step S103.

In the Step S103, the CPU 20a calculates the time difference between the transmission time and reception time from information associated with the received packet as delay time. Then, the CPU 20a determines whether the delay time exceeds a threshold.

If the delay time exceeds a threshold (Step S103; Yes), the CPU 20a proceeds to Step S104. On the other hand, if the continuous no-reception time does not exceed a threshold (Step S103; No), the CPU 20a proceeds to Step S105.

In the Step S 104, the CPU 20a calculates the latest total number $M_N$ based on the initial value $M_0$ of the total number of communication terminals 20 present within the communication area NA or the total number M calculated based on the initial value $M_0$. More specifically, the CPU 20a doubles the most recently estimated total number M to obtain the latest total number $M_N$ (= 2M).

On the other hand, in the Step S105, the CPU 20a counts the packets received in a unit time T1 in sequence to measure the throughput. Then, the CPU 20a determines whether the throughput is below a threshold.

If the throughput is below a threshold (Step S105; Yes), the CPU 20a proceeds to Step S106. On the other hand, if the throughput is equal to or above a threshold (Step S105; No), the CPU 20a proceeds to Step S109.

In the Step S106, the CPU 20a calculates the latest total number $M_N$ based on the above formula (1) and employs the newly calculated total number $M_N$ as the total number of communication terminals 20.

In Step S 107, the CPU 20a determines whether the value of the total number M is proper, namely whether the total number M is equal to or greater than the minimum value $M_{MIN}$ and equal to or lower than the maximum value $M_{MAX}$. If the value of the total number M is proper (Step S 107; Yes), the CPU 20a proceeds to Step S 109. On the other hand, if the value of the total number M is not proper (Step S107; No), the CPU 20a proceeds to Step S108.

In the step S108, the CPU 20a corrects the total number M to the maximum value $M_{MAX}$ when the total number M is greater than the maximum value $M_{MAX}$. On the other hand, the CPU 20a corrects the total number M to the minimum value $M_{MIN}$ when the total number M is lower than the minimum value $M_{MIN}$.

In the Step S109, the CPU 20a calculates the probability P based on the value of the total number M.

In Step S 110, the CPU 20a defines a slot for outputting information independently from the communication terminals 20 present within the communication area NA.

In Step S111, the CPU 20a determines whether to transmit a packet in the created slot based on the probability P.

In Step S 112, the CPU 20a associates information regarding the time determined to transmit a packet in the created slot (transmission time) with the transmission packet.

In Step S113, the CPU 20a determines whether there is any other communication terminal 20 transmitting information. If there is no other communication terminal 20 transmitting information, the CPU 20a starts to transmit the transmission packet.

On the other hand, if there is any other communication terminal 20 transmitting information, the information transmission unit 28 first waits for the transmission of information being completed. Then, after a time corresponding to a distributed access inter-frame space DIFS elapses, it is determined whether there is any other communication terminal 20 transmitting information over a time period corresponding to a contention window frame length. Then, if there is no other communication terminal 20 transmitting information, the CPU 20a starts to transmit the transmission packet.

After the transmission is over, the CPU 20a returns to the Step S101 and repeats the processing of the Steps S101 to S113.

As described above, in this embodiment, the communication terminals 20 transmit transmission packets with a probability based on the total number of communication terminals 20 present within the communication area NA. Thus, when to transmit can be determined by simple calculation and information can promptly be transmitted.

Furthermore, in this embodiment, when to transmit can be determined by simple calculation. Therefore, for example, when the communication terminals 20 are mounted on vehicles, when to transmit can promptly be determined according to continuously changing traffic conditions, whereby the throughput of the communication system 10 can be maintained at a high level.

<Embodiment 3>

Embodiment 3 of the present invention will be described hereafter with reference to the drawings. Here, the same or equivalent components as or to those in the above embodiment are referred to by the same reference numbers and their explanation will be omitted or simplified.

The communication terminals 20 according to this embodiment are different from the communication terminals 20 in Embodiment 1 in that they estimate the total number of communication terminals, M, based on the result of calculation using the number of times of successful packet reception and the number of times of unsuccessful packet reception. Incidentally, the communication terminals 20 according to this embodiment can have the transmission time storage 27, reception time recording unit 22a, continuous no-reception time measuring unit 22b, delay time measuring unit 22c, and throughput measuring unit 22d of the communication terminals 20 according to Embodiment 1; however, these are not particularly necessary.

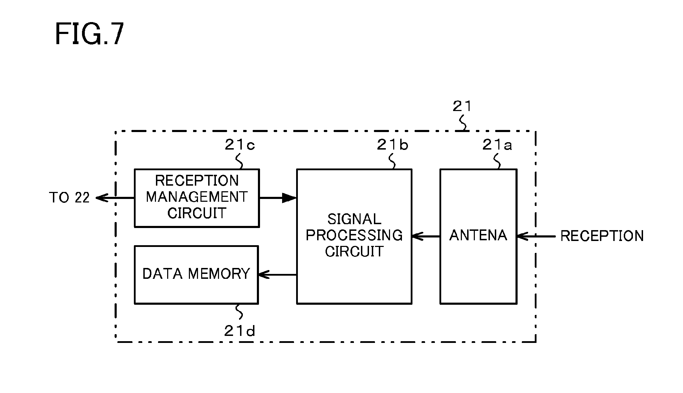

FIG. 7 is a block diagram of the information reception unit 21. As shown in FIG. 7, the information reception unit 21 has an antenna 21 a, a signal processing circuit 21b, a reception management circuit 21c, and data memory 21d.

The signal processing circuit 21b receives signals transmitted from the other communication terminals 20 via the antenna 21a. Then, the signal processing circuit 21b outputs data obtained by converting (demodulating) the received signals to single-bit digital signals to the data memory 21 d.

The reception management circuit 21c monitors the signal processing circuit 21b, and outputs the number of times of successful signal conversion (number of times of successful reception), a, and the number of times of unsuccessful signal conversion (number of times of unsuccessful reception), b, in a unit time T1 to the total node number estimate unit 22 in sequence.

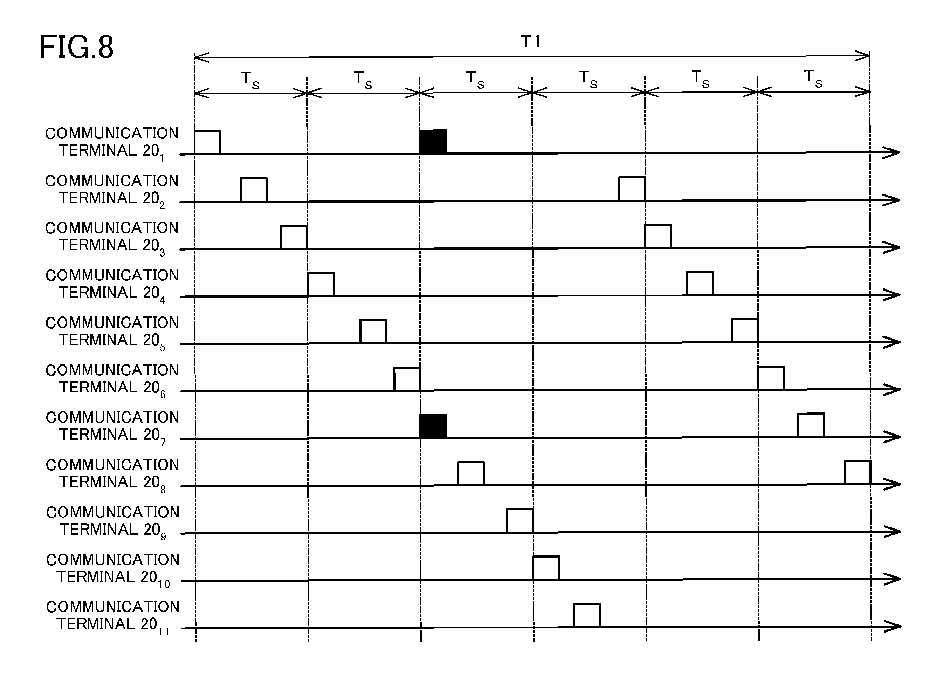

FIG. 8 is a chart schematically showing packets transmitted from communication terminals $20_1$ to $20_{11}$ when the communication system 10 consists of 11 communication terminals 20 by way of example. For example, a communication terminal $20_{11}$ as the communication terminal of interest receives packets transmitted from the communication terminals $20_1$ to $20_{11}$ in sequence in a unit time T1 that is six times larger than the slot length. Here, for convenience of explanation, it is assumed that the communication terminal $20_{11}$ receives packets transmitted from itself.

The reception management circuit 21c of the communication terminal $20_{11}$ updates the number of times of successful packet reception, a, by one ($a \leftarrow a + 1$) each time the signal processing circuit 21b completes the processing. On the other hand, when a packet output from the communication terminal $20_1$ and a packet output from the communication terminal $20_7$ collide with each other in the third slot, the signal processing circuit 21b fails to process. The reception management circuit 21c updates the number of times of unsuccessful packet reception, b, by one ($b \leftarrow b + 1$) each time the signal processing circuit 21d fails to process.

If packets are transmitted from the communication terminals $20_1$ to $20_{11}$ as shown in FIG. 8, the reception management circuit 21c of the communication terminals $20_{11}$ counts 17 as the number of times of successful reception, a, and 1 as the number of times of unsuccessful reception, b. The count results, namely the number of times of successful reception, a, and number of times of unsuccessful reception, b, are output to the total node number estimate unit 22.

The total node number estimate unit 22 calculates the latest total number of communication terminals 20 present within the communication area NA, $M_N$, based on the result of calculation using the number of times of successful reception, a, and number of times of unsuccessful reception, b.

For example, the total node number estimate unit 22 conducts calculation on the number of times of successful reception, a, and number of times of unsuccessful reception, b, using a formula: $a / (a + b)$. Then, when the calculation result is below a threshold, the total node number estimate unit 22 doubles the most recently estimated total number of communication terminals, M, to obtain the latest total number $M_N$ (= 2M).

The calculation result of the above formula is equivalent to the successful reception rate. When the number of times of successful reception, a, is 17 and the number of times of unsuccessful reception, b, is 1, the calculation result is 0.944. In such a case, if the threshold is, for example, 95 % and the most recently estimated total number of communication terminals, M, is 10, the total node number estimate unit 22 estimates that the latest total number of communication terminals 20, $M_N$, is 20 (= 10 x 2).

On the other hand, if the calculation result is equal to or greater than the threshold, the total node number estimate unit 22 calculates the latest total number $M_N$ based on the number of times of successful reception, a. For example, if the number of times of successful reception, a, is below a threshold, the total node number estimate unit 22 calculates the latest total number $M_N$ based on the formula (3) below using the number of packets to be received in a unit time T1, $\alpha$, and the actual number of successfully received packets in a unit time T1, $\beta$.

$$M_N = M \left( \beta / (\alpha \times \gamma) \right) \ldots (3)$$

The above $\gamma$ is an adjustment factor for adjusting the value of $\alpha$ according to the situation. The value of $\gamma$ is 1 where no particular adjustment is necessary. Here, $\alpha$ is an integer greater than 0. If $\beta$ is 0, $\beta$ is set to 1.

On the other hand, the total node number estimate unit 22 outputs the existing total number M to the correction unit 23 when the calculation result is equal to or greater than a threshold.

As described above, in this embodiment, the latest total number of communication terminals present within the communication area NA, M, is calculated based on the number of times of successful information reception, a, and the number of times of unsuccessful information reception, b.

Then, the latest total number of communication terminals present within the communication area NA, M, can be estimated with accuracy even if the communication terminals 20 constituting the communication system 10 are not in sync with each other in regard to the communication terminal-intrinsic time.

Furthermore, in this embodiment, the most recently estimated total number M is doubled in estimating the latest total number $M_N$. This is not restrictive. The most recently estimated total number M can be multiplied by k (k is a number greater than 1). The bottom line is, a proper total number of communication terminals 20 should be estimated according to the size of the communication area NA, the numbers of communication terminals 20 entering and leaving the communication area NA in a unit time, and so on.

<Embodiment 4>

Embodiment 4 of the present invention will be described hereafter with reference to the drawings. Here, the same or equivalent components as or to those in the above embodiment are referred to by the same reference numbers and their explanation will be omitted or simplified.

The communication terminals 20 according to this embodiment are different from the communication terminals 20 according to Embodiment 3 in that they estimate the total number of communication terminals, M, based on the result of calculation using the number of times of successful packet reception, a, and number of times of unsuccessful packet reception, b, and the number of successful communication terminals from which the communication terminal 20 has received information, c. Incidentally, the communication terminals 20 according to this embodiment can have the transmission time storage 27, reception time recording unit 22a, continuous no-reception time measuring unit 22b, delay time measuring unit 22c, and throughput measuring unit 22d of the communication terminals 20 according to Embodiment 1; however, these are not particularly necessary.

The signal processing circuit 21b of the information reception unit 21 according to this embodiment receives signals transmitted from the other communication terminals 20 via the antenna 21a. Then, the signal processing circuit 21b outputs data obtained by converting the received signals to single-bit digital signals to the data memory 21d.

The reception management circuit 21c monitors the signal processing circuit 21b, and outputs the number of times of successful reception upon which signals are successfully demodulated, a, the number of times of unsuccessful reception upon which signals are unsuccessfully demodulated, b, in a unit time T1 to the total node number estimate unit 22 in sequence. Furthermore, the reception management circuit 21c c identifies the communication terminals 20 having transmitted information of which signals were successfully converted based on, for example, the identifiers transmitted with the packets. Then, the reception management circuit 21c outputs the number of identified communication terminals 20 to the total node number estimate unit 22 in sequence as the number of successful communication terminals, c.

In the example of FIG. 8, the number of times of successful reception, a, is 17 and the number of times of unsuccessful reception, b, is 1. Excluding the communication terminal $20_7$ from the communication terminals $20_1$ to $20_{11}$, the number of identified communication terminals 20 is 10. These count results are output to the total node number estimate unit 22.

The total node number estimate unit 22 first conducts calculation using the first formula: a / (a + b). Then, if the calculation result is below a first threshold, the total node number estimate unit 22 conducts calculation using the second formula: c x (a + b) /a, and employs the calculation result as the latest total number of communication terminals, $M_N$.

For example, when the number of times of successful reception, a, is 17, the number of times of unsuccessful reception, b, is 1, and the number of communication terminals, c, is 10, the calculation result of the first formula is 0.944. If the first threshold is 95 % in this case, the calculation result of the first formula is below the first threshold. Then, the total node number estimate unit 22 conducts calculation using the second formula and obtains a value of 11 ($\approx$ 10.6) as the calculation result. The total node number estimate unit 22 estimates that the latest total number of communication terminals 20, $M_N$ is the value of 11.

In this way, the probability defined by the total number of communication terminals 20, M, is lowered. Consequently, collision of packets is prevented and the throughput of the communication system 10 is improved.

On the other hand, if the calculation result of the first formula is above a first threshold, the total node number estimate unit 22 estimates that the latest total number of communication terminals 20, $M_N$, is the number of successful communication terminals, c. Here, the total node number estimate unit 22 estimates that the latest total number of communication terminals 20, $M_N$, is the value of 10.

In the above case, it is possible to output the existing total number M to the correction unit 23 if the calculation result of the first formula is above a first threshold and the calculation result of a third formula: a / (T1/ $T_s$ x n) in which $T_s$ is the slot length, T1 is a unit time, and n is the number of packets in a slot is above a second threshold.

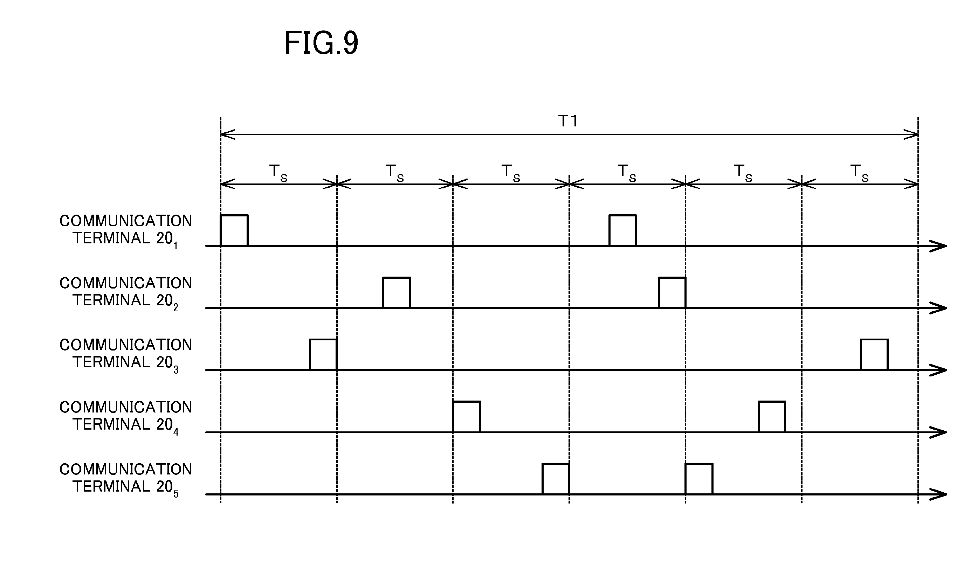

FIG. 9 is a chart schematically showing packets transmitted from communication terminals $20_1$ to $20_5$ when the communication system 10 consists of five communication terminals 20 by way of example. If 10 packets are transmitted in a unit time T1 as shown in FIG. 9, the number of times of successful reception, a, number of times of unsuccessful reception, b, and number of successful communication terminals, c, output from the reception management circuit 21c of the communication terminal 20 are 10, 0, and 5, respectively. Here, it is assumed that the second threshold is, for example, 60 %. The calculation result of the third formula is 0.556, which is below the second threshold. In such a case, the total node number estimate unit 22 estimates that the latest total number of communication terminals 20, $M_N$, is the value of 5 or the number of successful communication terminals, c. Then, the total node number estimate unit 22 outputs the latest total number $M_N$ to the correction unit 23.

On the other hand, if the second threshold is 50 %, the calculation result of the third formula is above the second threshold. In such a case, the total node number estimate unit 22 outputs the existing total number M to the correction unit 23 as the total node number.

As described above, in this embodiment, the latest total number of communication terminals present within the communication area NA, M, is calculated based on the number of times of successful reception, a, number of times of unsuccessful reception, b, and number of successful communication terminals, c.

Then, the latest total number of communication terminals present within the communication area NA, M, can be estimated with accuracy even if the communication terminals 20 constituting the communication system 10 are not in sync with each other in regard to the communication terminal-intrinsic time.

<Embodiment 5>

Embodiment 5 of the present invention will be described hereafter with reference to the drawings. Here, the same or equivalent components as or to those in the above embodiment are referred to by the same reference numbers and their explanation will be omitted or simplified.

The communication terminals 20 according to this embodiment are different from the communication terminals 20 according to Embodiment 1 in that they estimate the total number of communication terminals, M, by detecting packet reception errors. Incidentally, the communication terminals 20 according to this embodiment can have the transmission time storage 27, reception time recording unit 22a, continuous no-reception time measuring unit 22b, and delay time measuring unit 22c of the communication terminals 20 according to Embodiment 1; however, these are not particularly necessary.

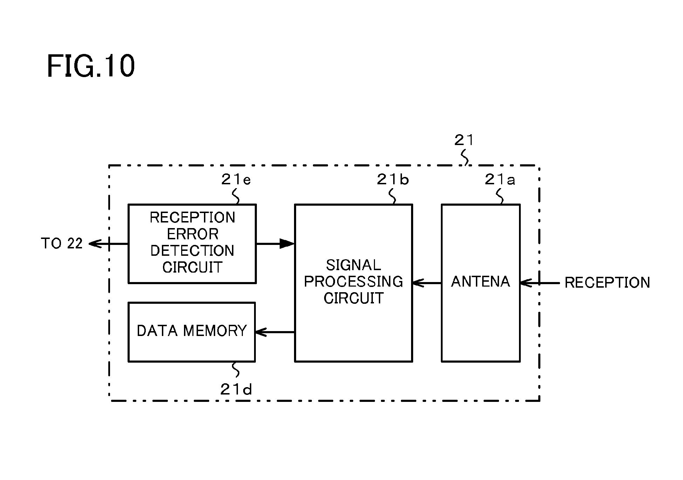

FIG. 10 is a block diagram of the information reception unit 21. As shown in FIG. 10, the information reception unit 21 has an antenna 21 a, a signal processing circuit 21 b, a data memory 21d, and a reception error detection circuit 21e.

The reception error detection circuit 21e monitors the signal processing circuit 21b and outputs unsuccessful signal conversion as a result of reception error detection to the total node number estimate unit 22.

The total node number estimate unit 22 calculates the latest total number of communication terminals 20 present within the communication area NA, $M_N$, based on the reception error detection result.

For example, receiving the reception error detection result, the total node number estimate unit 22 doubles the most recently estimated total number of communication terminals, M, to obtain the latest total number $M_N$ (= 2M).

On the other hand, if no reception error is detected, the total node number estimate unit 22 calculates the latest total number $M_N$ based on the throughput. For example, if the throughput is below a threshold, the total node number estimate unit 22 calculates the latest total number $M_N$ based on the formula (4) below and employs the newly calculated total +number $M_N$ as the total number of communication terminals 20.

$$M_N = M \left( \beta / (\alpha \times \gamma) \right) \dots (4)$$

The above $\alpha$ is an ideal number of packets to be received in a unit time T1 when the total number $M_N$ is equal to the actual total number of nodes. The value of $\alpha$ is determined by design. The above $\beta$ is the number of packets the communication terminal of interest has actually received in a unit time T1. The above $\gamma$ is an adjustment factor for adjusting the value of $\alpha$ according to the situation. The value of $\gamma$ is 1 where no particular adjustment is necessary. Here, $\alpha$ is an integer greater than 0. Furthermore, if $\beta$ is 0, $\beta$ is set to 1.

The above threshold can be, for example, 60 % of the ideal transmission rate of the communication medium. Then, the threshold is 18 if the theoretical number of received packets calculated from the transmission rate is 30. In such a case, if the number of packets received in a unit time T1 is below 18, a new total number $M_N$ is calculated based on the above formula (4).

Calculating the latest total number of communication terminals present within the communication area NA, $M_N$, in the above process, the total node number estimate unit 22 outputs information regarding the calculated total number $M_N$ to the correction unit 23 as total number information. On the other hand, if the throughput is equal to or above a threshold, the total node number estimate unit 22 outputs the existing total number M to the correction unit 23.

As described above, in this embodiment, the latest total number of communication terminals present within the communication area NA, M, is calculated based on the information reception error detection result.

Then, the latest total number of communication terminals present within the communication area NA, M, can be estimated with accuracy even if the communication terminals 20 constituting the communication system 10 are not in sync with each other in regard to the communication terminal-intrinsic time.

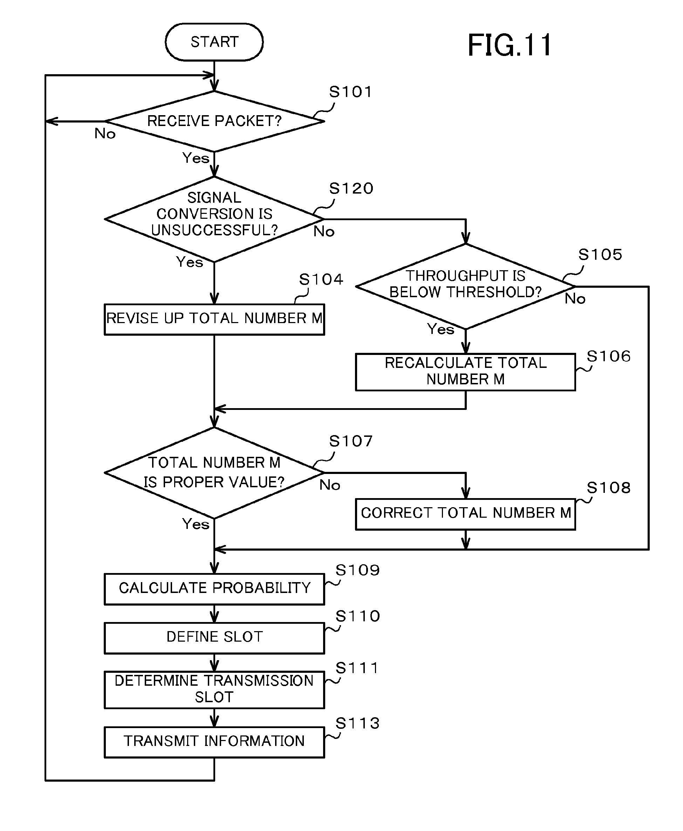

Furthermore, the communication terminals 20 according to this embodiment can be so composed to include a computer executing the procedure shown in the flowchart of FIG. 11. As shown in FIG. 11, the CPU 20a of the communication terminals 20 executes the processing of Step S120 instead of the processing of Steps S102 and S 103 in the flowchart of FIG. 6.

More specifically, if signal conversion is unsuccessful (Step S120; Yes), the CPU 20a proceeds to Step S 105. On the other hand, if signal conversion is successful (Step S120; No), the CPU 20a proceeds to Step S103.

Furthermore, in this embodiment, the most recently estimated total number M is doubled in estimating the latest total number $M_N$. This is not restrictive. The most recently estimated total number M can be multiplied by k (k is a number greater than 1). The bottom line is, a proper total number of communication terminals 20 should be estimated according to the size of the communication area NA, the numbers of communication terminals 20 entering and leaving the communication area NA in a unit time, and so on.

<Embodiment 6>

Embodiment 6 of the present invention will be described hereafter with reference to the drawings. Here, the same or equivalent components as or to those in the above embodiment are referred to by the same reference numbers and their explanation will be omitted or simplified.

The communication terminals 20 according to this embodiment are different from the communication terminals 20 according to Embodiment 1 in that they estimate the total number of communication terminals, M, from the number of packets waiting to be transmitted. Incidentally, the communication terminals 20 according to this embodiment can have the transmission time storage 27, reception time recording unit 22a, continuous no-reception time measuring unit 22b, and delay time measuring unit 22c of the communication terminals 20 according to Embodiment 1; however, these are not particularly necessary.

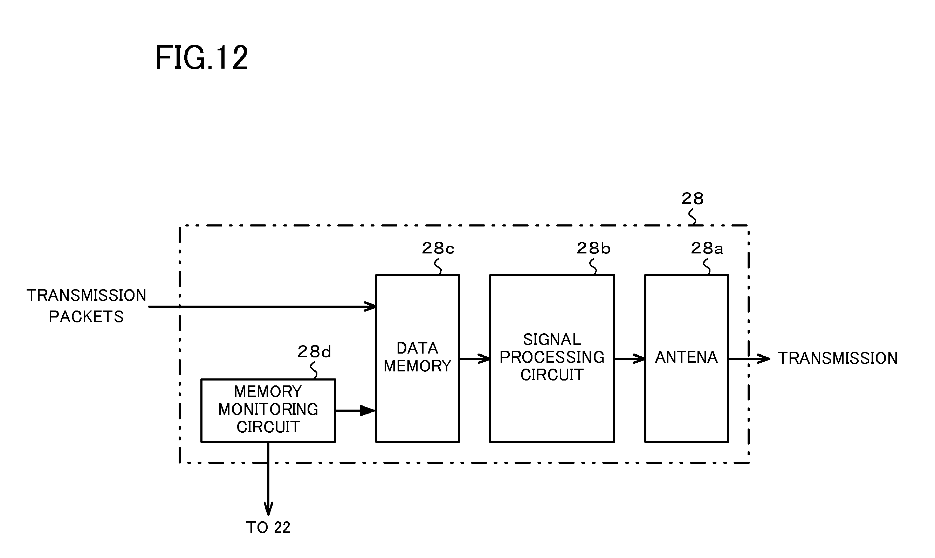

FIG. 12 is a block diagram of the information transmission unit 28. As shown in FIG. 12, the information transmission unit 28 has an antenna 28a, a signal processing circuit 28b, a data memory 28c, and a memory monitoring circuit 28d.

The memory monitoring circuit 28d monitors the data memory 28c, and outputs information regarding the number of transmission packets remaining in the data memory 28c to the total node number estimate unit 22.

The total node number estimate unit 22 calculates the latest total number of communication terminals 20 present within the communication area NA, $M_N$, based on the number of transmission packets remaining in the data memory 28c ("the number of remaining transmission packets," hereafter).

For example, the total node number estimate unit 22 determines whether the number of remaining transmission packets exceeds a threshold. If the number of remaining transmission packets exceeds a threshold, the total node number estimate unit 22 doubles the most recently estimate total number of communication terminals, M, to obtain the latest total number $M_N$ (= 2M). The threshold can be 2 in the communication of this embodiment.

On the other hand, if the number of remaining transmission packets does not exceed a threshold, the total node number estimate unit 22 calculates the latest total number $M_N$ based on the throughput. For example, if the throughput is below a threshold, the total node number estimate unit 22 calculates the latest total number $M_N$ based on the formula (5) below and employs the newly calculated total number $M_N$ as the total number of communication terminals 20.

$$M_N = M \left( \beta / (\alpha \times \gamma) \right) \dots (5)$$

The above $\alpha$ is an ideal number of packets to be received in a unit time T1 when the total number $M_N$ is equal to the actual total number of nodes. The value of $\alpha$ is determined by design. The above $\beta$ is the number of packets the communication terminal of interest has actually received in a unit time T1. The above $\gamma$ is an adjustment factor for adjusting the value of $\alpha$ according to the situation. The value of $\gamma$ is 1 where no particular adjustment is necessary. Here, $\alpha$ is an integer greater than 0. Furthermore, if $\beta$ is 0, $\beta$ is set to 1.

The above threshold can be, for example, 60 % of the ideal transmission rate of the communication medium. Then, the threshold is 18 if the theoretical number of received packets calculated from the transmission rate is 30. In such a case, if the number of packets received in a unit time T1 is below 18, a new total number $M_N$ is calculated based on the above formula (5).

Calculating the latest total number of communication terminals present within the communication area NA, $M_N$, in the above process, the total node number estimate unit 22 outputs information regarding the calculated total number $M_N$ to the correction unit 23 as total number information. On the other hand, if the throughput is equal to or above a threshold, the total node number estimate unit 22 outputs the existing total number M to the correction unit 23.

As described above, in this embodiment, the latest total number of communication terminals present within the communication area NA, M, is calculated based on the number of remaining transmission packets (the number of remaining pieces of transmission information).

Then, the latest total number of communication terminals present within the communication area NA, M, can be estimated with accuracy even if the communication terminals 20 constituting the communication system 10 are not in sync with each other in regard to the communication terminal-intrinsic time.

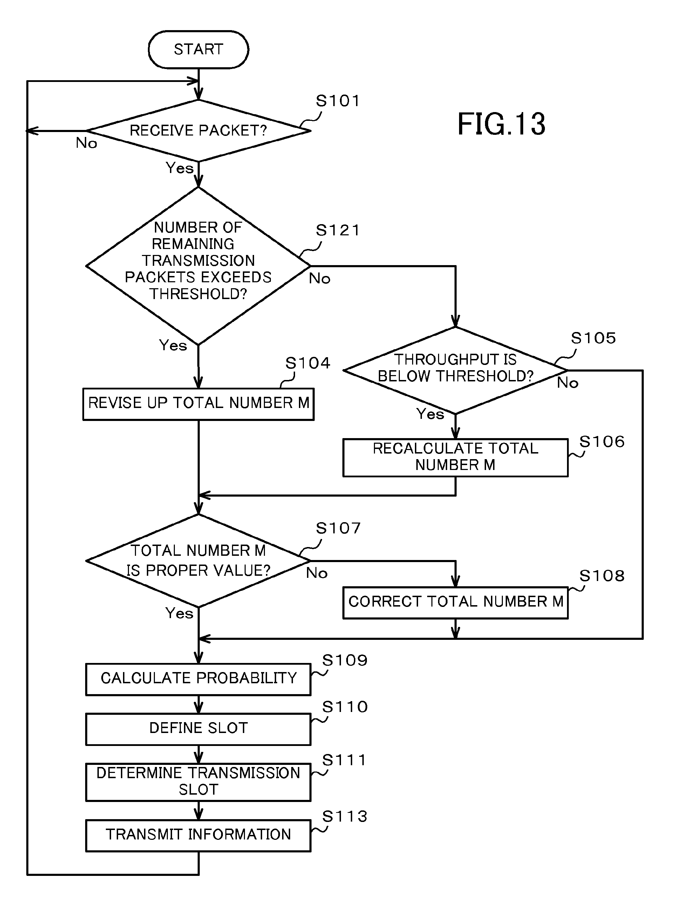

Furthermore, the communication terminals 20 according to this embodiment can be so composed to include a computer executing the procedure shown in the flowchart of FIG. 13. As shown in FIG. 13, the CPU 20a of the communication terminals 20 executes the processing of Step S121 instead of the processing of Steps S102 and S 103 in the flowchart of FIG. 6.

More specifically, if the number of remaining transmission packets exceeds a threshold (Step S121; No), the CPU 20a proceeds to Step S 105. On the other hand, if the number of remaining transmission packets does not exceed a threshold (Step S121; Yes), the CPU 20a proceeds to Step S104.

Furthermore, in this embodiment, the most recently estimated total number M is doubled in estimating the latest total number $M_N$. This is not restrictive. The most recently estimated total number M can be multiplied by k (k is a number greater than 1). The bottom line is, a proper total number of communication terminals 20 should be estimated according to the size of the communication area NA, the numbers of communication terminals 20 entering and leaving the communication area NA in a unit time, and so on.

<Embodiment 7>

Embodiment 7 of the present invention will be described hereafter with reference to the drawings. Here, the same or equivalent components as or to those in the above embodiment are referred to by the same reference numbers and their explanation will be omitted or simplified.

The communication terminals 20 according to this embodiment are different from the communication terminals 20 according to Embodiment 4 in that they are realized with the same configuration as devices such as conventional computers and microcomputers. Incidentally, the communication terminals 20 according to this embodiment can have the transmission time storage 27, reception time recording unit 22a, continuous no-reception time measuring unit 22b, delay time measuring unit 22c, and throughput measuring unit 22d of the communication terminals 20 according to Embodiment 1; however, these are not particularly necessary.

The communication terminals 20 according to this embodiment are so composed as to include a CPU 20a, a main storage 20b, an auxiliary storage 20c, a display unit 20d, an input unit 20e, an interface 20f, and a system bus 20g connecting these units to each other as shown in FIG. 5.

The CPU 20a transmits and receives traffic information according to programs stored in the auxiliary storage 20c.

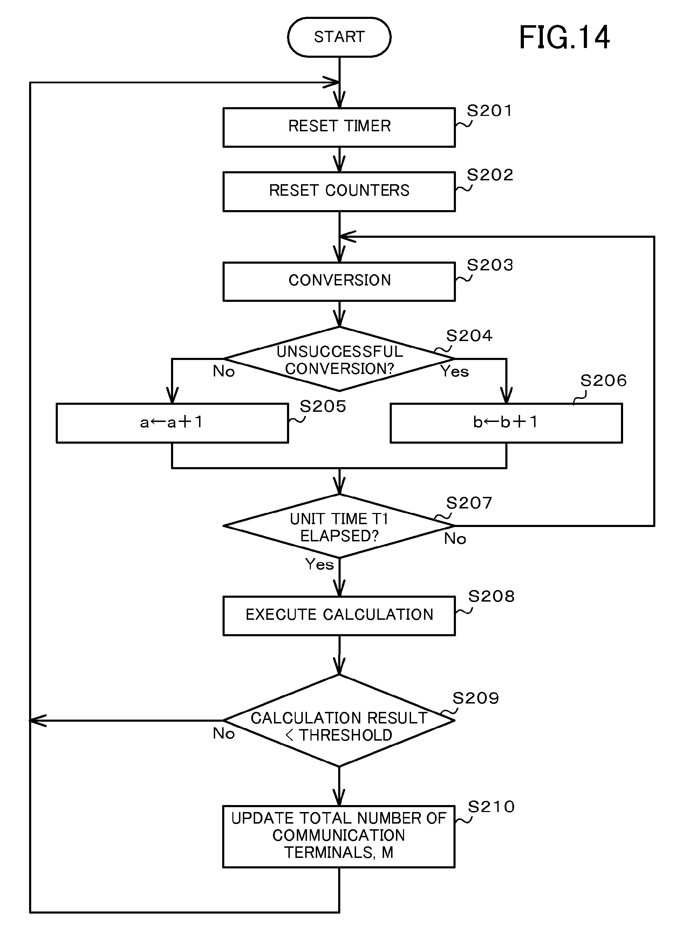

Operation of a communication terminal 20 will be described hereafter with reference to the flowchart of FIG. 14. The communication terminals 20 according to this embodiment update the total number of communication terminals 20 constituting the communication system 10, M, in every unit time T1 in parallel to information transmission processing. This procedure starts when the car navigation system of a vehicle on which the communication terminal 20 is mounted notifies the CPU 20a that the vehicle has entered the communication area NA. Then, the procedure discontinues when the car navigation system of the vehicle on which the communication terminal 20 is mounted notifies the CPU 20a that the vehicle has left the communication area NA. Here, it is assumed that any of the communication terminals 20 transmits information at any moment within the communication area NA.

As the vehicle enters the communication area NA, the CPU 20a first executes the processing of Step S201. In the Step S201, the CPU 20a resets the value of the timer measuring the elapsed time to zero.

In the next Step S202, the CPU 20a resets the values of the counters counting the number of times of successful reception, a, and the number of times of unsuccessful reception, b. In the following explanation, the number of times of successful reception, a, and number of times of unsuccessful reception, b, are also referred to as the counter value a and counter value b, respectively.

In the next Step S203, the CPU 20a receives a signal transmitted from another communication terminal 20, and then converts the received signal to single-bit digital signals.

In the next Step S204, the CPU 20a determines whether the conversion was successful or unsuccessful in the Step S203. If the conversion was successful (Step S204; No), the CPU 20a proceeds to the next Step S205 and increments the counter value a by 1. On the other hand, if the conversion was unsuccessful, the CPU 20a proceeds to the next Step S206 and increments the counter value b by 1.

In the next Step S207, the CPU 20a determines whether a unit time T1 has elapsed with reference to the timer count value. If a unit time T1 has not elapsed (Step S207; No), the CPU 20a returns to the Step S203 and repeats the processing of the Steps S203 to S207 until the affirmative result is obtained in the determination of the Step S207. On the other hand, if a unit time T1 has elapsed (Step S207; Yes), the CPU 20a proceeds to the next Step S208.

In the Step S208, the CPU 20a conducts calculation using the formula: $a / (a + b)$ having the counter values a and b as variables.

In the next Step S209, the CPU 20a determines whether the calculation result of the formula is below a threshold. If the calculation result is not below a threshold (Step S209; No), the CPU 20a returns to the Step S201 and repeats the processing of the Steps S201 to S209 until the affirmative result is obtained in the determination of the Step S209. On the other hand, if the calculation result is below a threshold (Step S209; Yes), the CPU 20a proceeds to the next Step S210.

In the Step S210, the CPU 20a updates the total number of communication terminals 20, M. More specifically, the CPU 20a doubles the most recently estimated total number of communication terminals, M, to obtain the latest total number $M_N$ (= 2M). Then, the CPU 20a returns to the Step S201 and repeats the processing of the Steps S201 to S210.

In parallel to the above procedure, the CPU 20a calculates the probability P based on the total number of communication terminals 20, and executes a procedure to transmit packets with this probability.

As described above, in this embodiment, the latest total number of communication terminals present within the communication area NA, M, is calculated based on the number of times of successful reception, a, and number of times of unsuccessful reception, b.

Then, the latest total number of communication terminals present within the communication area NA, M, can be estimated with accuracy even if the communication terminals 20 constituting the communication system 10 are not in sync with each other in regard to the communication terminal-intrinsic time.

Furthermore, in this embodiment, the CPU 20a calculates the total number of communication terminals present within the communication area NA, M, based on the number of times of successful reception, a, and number of times of unsuccessful reception, b. This is not restrictive. The CPU 20a can calculate the total number of communication terminals present within the communication area NA, M, using the number of successful communication terminals, c, in addition to the number of times of successful reception, a, and number of times of unsuccessful reception, b, as in the communication terminals 20 according to Embodiment 4.

Embodiments of the present invention are described above. The present invention is not confined to the above embodiments.

For example, three communication terminals 20 are present within the communication area NA in the above-described Embodiment 1. This is not restrictive. Four or more communication terminals can be present within the communication area NA. Likewise, in the embodiments other than Embodiment 1, the communication system is not restricted to those numbers of communication terminals given in the embodiments.

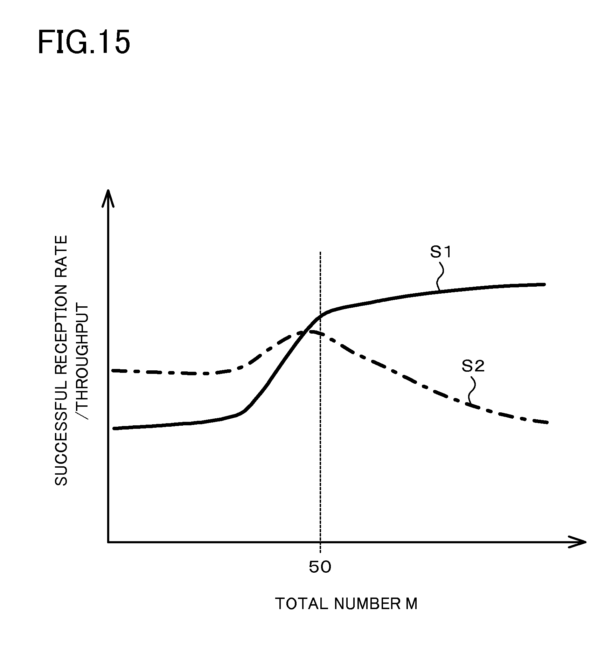

FIG. 15 is a graphical representation showing the relationship between the total number of communication terminals, M, estimated by the communication terminals 20 and the successful reception rate and throughput when, for example, 50 communication terminals are present within the communication area NA. In FIG. 15, the curve S 1 presents the relationship between the total number M and successful reception rate and the curve S2 presents the relationship between the total number M and throughput.

As seen from the curve S1, the successful reception rate remains high when the estimated total number M is equal to or greater than the number of communication terminals actually present within the communication area NA (50). On the other hand, the successful reception rate gradually drops along with the total number M when the estimated total number M is equal to or lower than the number of communication terminals actually present within the communication area NA (50). This is because the probability P is high and packet collision occurs more frequently when the total number M is equal to or lower than the number of communication terminals actually present within the communication area NA (50).

On the other hand, as seen from the curve S2, the throughput is highest when the estimated total number M is nearly equal to the number of communication terminals actually present within the communication area NA (50). Then, the throughput drops as the total number M deviates from the number of actually existing communication terminals.

As seen with reference to the curves S1 and S2, the communication system 10 can maintain a high level of communication efficiency by estimating the number of communication terminals with accuracy even when four or more communication terminals are present within the communication area NA.

In the above-described Embodiments 3 and 4, the signal processing circuit 21b converts the received signal to single-bit digital signals and the reception management circuit 21c counts the number of times of successful reception and number of times of unsuccessful reception by packet. This is not restrictive. The communication terminal 20 can count the number of times of successful reception and number of times of unsuccessful reception by byte or by bit.

In the above-described Embodiment 4, the reception management circuit 21c counts the number of successful communication terminals, c, based on the identifiers transmitted with packets. The identifier can be, for example, identification information that can be identified by the application unit, identification information that can be identified by the network unit, or identification information that can be identified by the medium unit of the communication terminal 20.

In the above-described Embodiments 3 and 4, the calculated total number of communication terminals 20 is used to calculate the probability. This is not restrictive. The transmission power in transmitting information can be adjusted based on the calculated total number of communication terminals 20. For example, the transmission power is reduced and a communication terminal 20 transmits information only to nearby communication terminals 20 when the total number of communication terminals 20 is high. In this way, occurrence of packet collision in the entire network can be reduced.

Alternatively, the directionality in transmitting information can be adjusted based on the calculated total number of communication terminals 20. In this way, for example, information can be transmitted in the direction in which the communication terminals 20 are densely present and the communication throughput can be improved.

In the above embodiments, the communication system 10 consists of the communication terminals 20. This is not restrictive. The nodes constituting the communication system 10 can be, for example, measuring devices or navigation devices themselves that are mounted on vehicles along with the communication terminals 20.

In the above embodiments, vehicle-to-vehicle communication is conducted. The present invention is not restricted thereto. The present invention is applicable, for example, to a communication system in which cellphones constitute nodes. More specifically, the communication system can consist of cell-phones carried by users who are moving (for example, walking). Furthermore, the nodes can be, for example, sensor nodes. The sensor nodes can be sensors transmitting the soil state, moisture, temperature, etc. of farmland.

In the above-described Embodiment 2, the programs stored in the auxiliary storage 20c of the communication terminals 20 can be stored and distributed on a computer-readable recording medium such as a flexible disc, CD-ROM (compact disk read only memory), DVD (digital versatile disk), and MO (magneto-optical disk), and installed on a computer to configure a device executing the above-described procedures.

The communication terminal according to the present invention comprises the first measuring means measuring the reception time at which information is received. It is sufficient that the first measuring means at least measures the reception time at which information transmitted from the other nodes constituting the network is received. Furthermore, it is sufficient that the first count means counting the number of times of reception of information in a given time at least counts the number of times of reception of information transmitted from the other nodes constituting the network.

The communication terminal of the present invention constitutes a network and comprises an estimate means estimating the total number of nodes constituting the network, a slot setting means setting a slot for outputting one or multiple pieces of information independently from the other nodes, a calculation means calculating the probability based on the total number of nodes, and an output means outputting information with the probability.

Various embodiments and modifications are available to the present invention without departing from the broad sense of spirit and scope of the present invention. The above-described embodiments are given for explaining the present invention and do not confine the scope of the present invention.

This application is based on Japanese Patent Application No. 2010-6321, filed on January 14, 2010, the entire specification, scope of claims, and drawings of which is incorporated by reference herein.

Industrial Applicability

The node, communication system, program, and communication method of the present invention is suitable for information communication.

Description of Reference Numerals

    10 Communication system
    20 Communication terminal
    20a CPU
    20b Main storage
    20c Auxiliary storage
    20d Display unit
    20e Input unit
    20f Interface
    20g System bus
    21 Information reception unit
    21a Antenna
    21b Signal processing circuit
    21c Reception management circuit
    21d Data memory
    21e Reception error detection circuit
    22 Total node number estimate unit
    22a Reception time recording unit
    22b Continuous no-reception time measuring unit
    22c Delay time measuring time
    22dThroughput measuring unit
    22eTotal node number calculation unit
    23 Correction unit
    24 Probability setting unit
    25 Slot defining unit
    26 Drawing unit
    27 Transmission time storage
    28 Information transmission unit
    28a Antenna
    28b Signal processing unit
    28c Data memory
    28d Memory monitoring circuit
    CA Communicable area
    NA Communication area
    P1 to P4 points

**Claims**

1. A node constituting a network, comprising:

    an estimate means estimating the total number of nodes constituting the network;
a slot setting means setting a slot for outputting one or multiple pieces of information independently from the other nodes;
a probability calculation means calculating the probability of outputting information based on the total number of nodes; and
an output means outputting information in the slot with the probability.

2. The node according to Claim 1, comprising:

an addition means adding to information to be output the output time at which the information is output;
a first measuring means measuring the reception time at which information is received;
a delay time calculation means calculating information delivery delay time from the output time of received information and the reception time;
a second measuring means measuring the elapsed time from the reception time that is latest; and
a third measuring means measuring the effective throughput in receiving information,
wherein the estimate means estimates the total number of nodes constituting the network based on at least any one of the information delivery delay time, elapsed time, and effective throughput.

3. The node according to Claim 2, wherein:

the estimate means estimates the total number of nodes greater than the most recently estimated total number of nodes when the elapsed time exceeds a threshold.

4. The node according to Claim 2 or 3, wherein:

the estimate means estimates the total number of nodes greater than the most recently estimated total number of nodes when the information delivery delay time exceeds a threshold.

5. The node according to any one of Claims 2 to 4, wherein:

the estimate means estimates the total number of nodes lower than the most recently estimated total number of nodes when the effective throughput is below a threshold.

6. The node according to any one of Claims 1 to 5, further comprising:

a synchronization means for time-synchronizing with the other nodes.

7. The node according to Claim 1, comprising:

a first count means counting the number of times of reception of information in a given time; and
a second count means counting the number of times of unsuccessful reception of information in the given time,
wherein the estimate means estimates the total number of nodes constituting the network based on the count results of the count means.

8. The node according to Claim 7, wherein:

the estimate means estimates the total number of nodes greater than the most recently estimated total number of nodes when the result of calculation by a formula: $a/(a+b)$ is below a threshold in which a is the number of times counted by the first count means and b is the number of times counted by the second count means.

9. The node according to Claim 7, further comprising:

a third count means counting the number of nodes having transmitted the information received in a given time.

10. The node according to Claim 9, wherein:

the estimate means estimates the total number of nodes using a formula: $c \times (a + b) / a$ when the result of calculation by a formula: $a / (a +b)$ is equal to or shorter than a threshold in which a is the number of times counted by the first count means, b is the number of times counted by the second count means, and c is the number counted by the third count means.

11. The node according to any one of Claims 7 to 10, wherein:

the received information contains identification information for the application unit of the node that has received the information to identify the node that has transmitted the information.

12. The node according to any one of Claims 7 to 11, wherein:

the received information contains identification information for the network unit of the node that has received the information to identify the node that has transmitted the information.

13. The node according to any one of Claims 7 to 12, wherein:

the received information contains identification information for the medium unit of the node that has received the information to identify the node that has transmitted the information.

**14.** The node according to Claim 1, comprising:

a reception error detection means detecting reception errors in receiving information; and
a measuring means measuring the effective throughput in receiving information,
wherein the estimate means estimates the total number of nodes constituting the network based on at least any one of the reception errors and effective throughput.

**15.** The node according to Claim 14, wherein:

the estimate means estimates the total number of nodes greater than the most recently estimated total number of nodes when the reception errors are detected.

**16.** The node according to Claim 14 or 15, wherein:

the estimate means estimates the total number of nodes lower than the most recently estimated total number of nodes when the effective throughput is below a threshold.

**17.** The node according to Claim 1, comprising:

a first measuring means measuring the number of remaining transmission information stored in the data memory storing information to be transmitted; and
a second measuring means measuring the effective throughput in receiving information,
wherein the estimate means estimates the total number of nodes constituting the network based on at least one of the number of remaining transmission information and effective throughput.

**18.** The node according to Claim 17, wherein:

the estimate means estimates the total number of nodes greater than the most recently estimated total number of nodes when the number of remaining transmission information exceeds a threshold.

**19.** The node according to Claim 17 or 18, wherein:

the estimate means estimates the total number of nodes lower than the most recently estimated total number of nodes when the effective throughput is below a threshold.

**20.** The node according to any one of Claims 1 to 19, further comprising:

a correction means correcting the total number of nodes estimated by the estimate means so as to fall within a given range.

**21.** The node according to any one of Claims 1 to 20, further comprising:

an adjustment means adjusting the probability according to the priority level of information to be transmitted.

**22.** A communication system including a plurality of the nodes according to any one of Claims 1 to 21.

**23.** A program, allowing a control device of a node constituting a network to execute following procedures:

estimating the total number of nodes constituting the network;
setting a slot for outputting one or multiple pieces of information independently from the other nodes;
calculating the probability of transmitting information based on the total number of nodes; and
outputting information in the slot with the probability.

**24.** A communication method for conducting communication within a network, including the following steps:

estimating the total number of nodes constituting the network;
setting a slot for outputting one or multiple pieces of information independently from the other nodes;
calculating the probability of transmitting information based on the total number of nodes; and
outputting information in the slot with the probability.

FIG.1

FIG.2

EP 2 525 619 A1

# FIG.3

22

22e

22b

22a

CONTINUOUS NO-RECEPTION TIME MEASURING UNIT

RECEPTION TIME RECORDING UNIT

FROM 21

TOTAL NODE NUMBER CALCULATION UNIT

22c

DELAY TIME MEASURING UNIT

TO 23

22d

THROUGHPUT MEASURING UNIT

# FIG.4

FIG.5

FIG.6

START

S101
RECEIVE PACKET?
No
Yes

S102
CONTINUOUS NO-RECEPTION TIME EXCEEDS THRESHOLD?
Yes
No

S103
DELAY TIME EXCEEDS THRESHOLD?
No
Yes

S105
THROUGHPUT IS BELOW THRESHOLD?
No
Yes

S104
REVISE UP TOTAL NUMBER M

S106
RECALCULATE TOTAL NUMBER M

S107
TOTAL NUMBER M IS PROPER VALUE?
No
Yes

S108
CORRECT TOTAL NUMBER M

S109
CALCULATE PROBABILITY

S110
DEFINE SLOT

S111
DETERMINE TRANSMISSION SLOT

S112
ADD TRANSMISSION TIME INFORMATION

S113
TRANSMIT INFORMATION

FIG.7

21

21c    21b    21a

RECEPTION
MANAGEMENT
CIRCUIT

TO 22 ←

→

SIGNAL
PROCESSING
CIRCUIT

← ANTENA ← RECEPTION

DATA MEMORY ←

21d

# FIG.8

EP 2 525 619 A1

EP 2 525 619 A1

# FIG.9

FIG.10

# FIG.11

```
                    START

                      │
                      ▼
              ┌──────────────┐  S101
         No   │ RECEIVE PACKET? │
    ◄─────────┤              │
              └──────────────┘
                   │ Yes
                   ▼
              ┌──────────────┐  S120
              │   SIGNAL     │
              │ CONVERSION IS│  No
              │UNSUCCESSFUL? ├──────────────┐
              └──────────────┘              │
                   │ Yes                    ▼
                   ▼                  ┌──────────────┐  S105
          ┌──────────────────┐ S104   │ THROUGHPUT IS│  No
          │REVISE UP TOTAL NUMBER M│   │BELOW THRESHOLD?├────┐
          └──────────────────┘       └──────────────┘      │
                   │                      │ Yes             │
                   │                      ▼                 │
                   │              ┌──────────────┐ S106     │
                   │              │RECALCULATE TOTAL│        │
                   │              │  NUMBER M    │           │
                   │              └──────────────┘           │
                   │                      │                  │
                   ◄──────────────────────┘                  │
                   ▼                                         │
          ┌──────────────┐  S107                             │
          │ TOTAL NUMBER M│  No                              │
          │IS PROPER VALUE?├───────┐                         │
          └──────────────┘        ▼                         │
                   │ Yes   ┌──────────────────┐ S108         │
                   │       │CORRECT TOTAL NUMBER M│           │
                   │       └──────────────────┘             │
                   │               │                        │
                   ◄───────────────┴────────────────────────┘
                   ▼
          ┌──────────────────┐ S109
          │CALCULATE PROBABILITY│
          └──────────────────┘
                   │
                   ▼
          ┌──────────────┐ S110
          │  DEFINE SLOT │
          └──────────────┘
                   │
                   ▼
          ┌──────────────────┐ S111
          │DETERMINE TRANSMISSION│
          │      SLOT        │
          └──────────────────┘
                   │
                   ▼
          ┌──────────────────┐ S113
          │TRANSMIT INFORMATION│
          └──────────────────┘
```

# FIG.12

28

28c DATA MEMORY

28b SIGNAL PROCESSING CIRCUIT

28a ANTENA

28d MEMORY MONITORING CIRCUIT

TRANSMISSION PACKETS

TRANSMISSION

TO 22

**FIG.13**

START

S101
RECEIVE PACKET?
No
Yes

S121
NUMBER OF REMAINING TRANSMISSION PACKETS EXCEEDS THRESHOLD?
No
Yes

S104
REVISE UP TOTAL NUMBER M

S105
THROUGHPUT IS BELOW THRESHOLD?
No
Yes

S106
RECALCULATE TOTAL NUMBER M

S107
TOTAL NUMBER M IS PROPER VALUE?
No
Yes

S108
CORRECT TOTAL NUMBER M

S109
CALCULATE PROBABILITY

S110
DEFINE SLOT

S111
DETERMINE TRANSMISSION SLOT

S113
TRANSMIT INFORMATION

# FIG.14

START

RESET TIMER — S201

RESET COUNTERS — S202

CONVERSION — S203

UNSUCCESSFUL CONVERSION? — S204

No — $a \leftarrow a+1$ — S205

Yes — $b \leftarrow b+1$ — S206

UNIT TIME T1 ELAPSED? — S207

No

Yes

EXECUTE CALCULATION — S208

CALCULATION RESULT < THRESHOLD — S209

No

UPDATE TOTAL NUMBER OF COMMUNICATION TERMINALS, M — S210

# FIG.15

<table>
<tr><td colspan="2"><b>INTERNATIONAL SEARCH REPORT</b></td><td>International application No.<br><br>PCT/JP2011/050523</td></tr>
</table>

| A. CLASSIFICATION OF SUBJECT MATTER |
|---|
| *H04W74/08*(2009.01)i, *G08G1/09*(2006.01)i, *H04W72/04*(2009.01)i, *H04W84/18*<br>(2009.01)i |

According to International Patent Classification (IPC) or to both national classification and IPC

| B. FIELDS SEARCHED |
|---|
| Minimum documentation searched (classification system followed by classification symbols)<br>H04B7/24-7/26, H04W4/00-99/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2007-88938 A  (Oki Electric Industry Co.,<br>Ltd.),<br>05 April 2007 (05.04.2007),<br>paragraphs [0050] to [0052]; fig. 5<br>(Family: none) | 1,6,20-24<br>2-5,7-19 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 February, 2011 (07.02.11) | Date of mailing of the international search report<br>15 February, 2011 (15.02.11) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 525 619 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4004517 B
- JP 2010006321 A